# EUROPEAN PATENT SPECIFICATION

(11) **EP 1 894 408 B1**
(45) Date of publication and mention of the grant of the patent: **04.07.2012**
(21) Application number: 06752539.4
(22) Date of filing: 12.05.2006
(51) Int. Cl.: H04N 5/445, G06F 13/00, H04N 5/45

(54) **DYNAMIC MEDIA GUIDE LISTINGS**
DYNAMISCHE MEDIA-ANLEITUNGSAUFLISTUNGEN
LISTES DYNAMIQUES DE GUIDE MEDIA

(30) Priority: 23.06.2005 US 165923
(43) Date of publication of application: 05.03.2008
(73) Proprietor: MICROSOFT CORPORATION, Redmond, Washington 98052-6399 (US)
(72) Inventor: MORRIS, Ronald Alan, Redmond, Washington 98052-6399 (US); SLOO, David, Redmond, Washington 98052-6399 (US)
(74) Representative: Grünecker, Kinkeldey, Stockmair & Schwanhäusser
(86) International application number: PCT/US2006/018626
(87) International publication number: WO 2007/001661

(56) References cited:
- WO-A1-2005/036875
- AU-B2- 755 071
- US-A1- 2003 126 605
- US-A1- 2004 239 809
- US-A1- 2005 132 291

## Description

### BACKGROUND

In order to locate programs suitable for viewing on modern multimedia systems, a viewer typically must navigate through lists of program titles presented by user Interfaces, such as electronic program guides (EPGs). In many cases, to obtain an adequate description of a program, the viewer must transition to a screen different from that currently viewed. The viewer may then be required to transition to yet another screen to preview the program. Frequently, there is no available preview or the user must tune to a program to preview it.

US 2003/0126605 A1 discloses an interactive television system having electronic program guide (EPG) providing Video-Clip Previews on Demand by automatically launching a video clip preview, after browsing and navigating through the EPG's grid guide to a highlighted program titled cell, and remaining at such highlighted cell for a predetermined delay.

WO 2005036875 (A1) discloses a method and a system of displaying a user interface to control playback and features that may be associated with a prerecorded media. A media player, such as a DVD player, a personal computer, a home media server, a high definition video player, an optical player, a hard drive based player, or a software DVD-ROM player receives streams of video from different media and displays its content. Simultaneously, and without interrupting the video playback, a user interface is overlaid on the video image, wherein the user interface may include menu selections to control the playback of the video.

### SUMMARY

It is the object of the present invention to provide an improved method for presenting an user-friendly electronic program guide on a screen, as well as a corresponding computer readable medium.

This object is solved by the subject matter of the independent claims.

Preferred embodiments are defined by the dependent claims.

This Summary is provided to generally introduce, in a simplified form, the reader to one or more select concepts described below in the Detailed Description. This Summary is not intended to identify key and/or required features of the claimed subject matter, nor is it intended to be used as an aid in determining the scope of the claimed subject matter.

An embodiment of the present invention provides a system coupled to a display device, such as, for example, a television, having a screen. The system displays media content on the screen. The system receives a command to display on the screen an EPG. In response to the command, the system displays, concurrently with displaying the media content, a first dynamic video program within a first portion of the screen.

An embodiment of the present invention further provides a system operable to be coupled to a client device for presenting programming via a display device, such as, for example, a television, having a screen. The system enables the client device to simultaneously display in a user interface portion of the screen a plurality of video programs, at least one program of the plurality being dynamic. The client device is operable to receive a program selection. The selection is received during display of a frame of the selected program corresponding to a progress position of the program (*e.g*. a particular scene in the program). The system enables the client device to continue, from the progress position, display of the selected program on a portion of the screen other than the interface portion.

### BRIEF DESCRIPTION OF THE DRAWINGS

FIG. 1 is a schematic diagram of an illustrative interactive media system in which embodiments of the invention may be implemented;

FIGS. 2A and 2B are screen displays illustrating operational features according to an embodiment of the invention;

FIG. 3 is a flow diagram of a method according to an embodiment of the invention;

FIG. 4 is a flow diagram of a method according to an alternative embodiment of the invention; and

FIG. 5 is a flow diagram of a method according to an alternative embodiment of the invention.

### DETAILED DESCRIPTION

Generally described herein, among other things, are methods implementable in an advanced television system that enable a user of the system to preview available program selections within a navigable user interface. In an embodiment, a user can invoke display of an EPG that includes a set of program listings that a user can navigate through and select using an interactive field. These program listings may be associated with, for example, live-broadcast programs, recorded programs, or on-demand content. Instead of, or in addition to, conventional textual descriptions, the program listings include a full-motion view of the programs associated with the program listings. Additionally, the view of the program that is currently selectable (*i.e*., coincident with the interactive field) may have a display quality distinguishable from that of the views of programs not currently selectable.

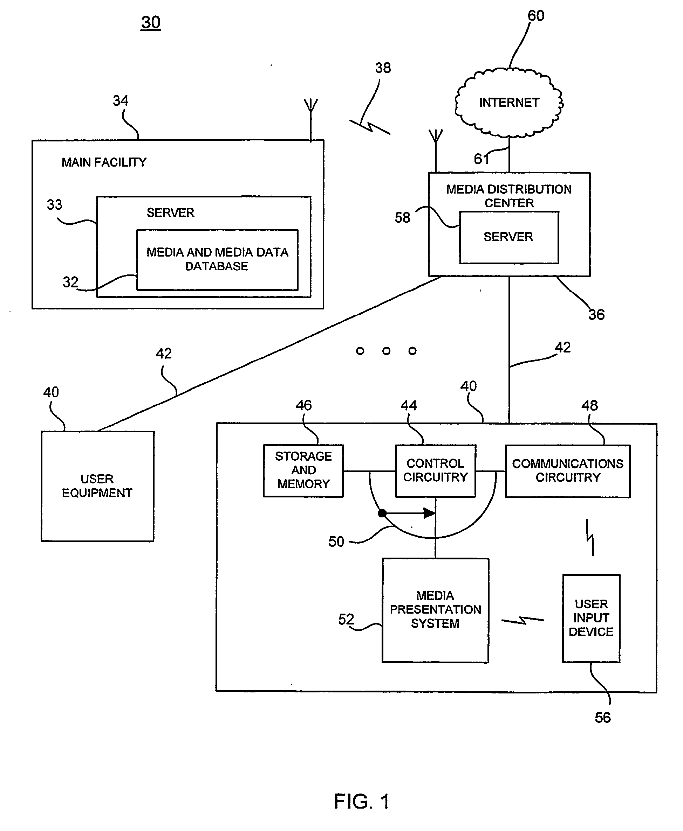

FIG. 1 illustrates an interactive media system 30 in which one or more embodiments of the invention may be implemented. The components of the interactive media system 30 described herein are exemplary and are not intended to suggest any limitation as to the scope of use or functionality of embodiments of the invention. The described embodiments of the invention should not be interpreted as having any particular dependency or requirement relating to any one component or combination of components illustrated in and described with reference to FIG. 1.

The interactive media system 30 may include a main facility 34, a media distribution facility 36, and user equipment 40, including one or more client devices. Although only one main facility 34 is illustrated in FIG. 1, the interactive media system 30 may include multiple main facilities. For clarity, embodiments of the invention will be at least primarily discussed in connection with the use of one such main facility. The main facility 34 may include a server 33 for storing and distributing media programs and associated media data from a media and media data database 32, which may be used for storing media programs and media data.

Media programs may include audio and video media such as broadcast television programs, cable television programs, pay-per-view programs, video-on-demand (VOD) programs, near video-on-demand (NVOD) programs, available-on-demand applications (*e.g*., on-demand interactive games), music, promotional material, or any other type of deliverable media. In the described exemplary implementations, the media programs may be associated with traditional broadcast channels (which are tuned by frequency), with IPTV broadcast channels (which are tuned by universal resource locator (URL)), and/or with any other types of channels over which media content may be transmitted. Media data may include data associated with the media programs, such as metadata, identifiers, URLs, interactive media application control information, program guide information (*e.g*., program guide listings data, pay-per-view ordering information, program promotional information, or any other suitable program guide information) or any other deliverable data.

Main facility 34 may distribute the media programs and media data to multiple media distribution facilities 36 via communications paths such as communications path 38. Communications path 38 may be any suitable communications path, such as a satellite link, a cable link, a fiber-optic link, a microwave link, a telephone network link, an Internet link, or a combination of such Jinks. Although only one distribution facility 36 is illustrated in FIG. 1, the interactive media system 30 may include multiple distribution facilities. For clarity, the invention will be primarily discussed in connection with the use of one such distribution facility.

Media distribution facility 36 may be a broadcast television facility, a cable system headend, a satellite distribution facility, a broadcast music facility, or any other suitable media distribution facility for transmitting media programs and any other suitable information to user equipment 40. Media distribution facility 36 may include a server 58. Server 58 may be capable of handling media such as text, images, graphics, audio, video, any other suitable media, or a combination of such media. Server 58 may include a database for storing media programs, media data or any other suitable content. In addition, server 58 may be capable of providing interactive services such as NVOD and VOD. Server 58 may be based on one or more computers. Media distribution facility 36 may distribute various media programs to user equipment 40 over communications paths 42, which may be unidirectional or bidirectional.

Each media distribution facility 36 may have a number of associated users, each of which may have user equipment 40 coupled to the media distribution facility via one of communications paths 42. User equipment 40 may include equipment such as user television equipment, user computer equipment (*e.g*., a desktop computer, a laptop computer, a notebook computer, a handheld computing device such as a personal digital assistant or other small portable computer, *etc*.), user music equipment (*e.g*., a stereo receiver) or any other suitable user media equipment for presenting media programs and/or executing an application, such as an interactive media application. An interactive media application may be implemented locally on user equipment 40 or may be implemented using a client-server or distributed architecture where some of the application is implemented locally on user equipment 40 in the form of a client process and some of the application is implemented at a remote location (*e.g*., media distribution facility 36) as a server process.

User equipment 40 may include components, such as control circuitry 44, storage and memory 46, communication circuitry 48, media presentation system 52, and user input device 56, for presenting media programs and/or implementing an interactive media application. The control circuitry 44, storage and memory 46, and communication circuitry 48 may be combined to form a conventional client device, such as, for example, a set-top box (STB). The components may be configured to support functions of the interactive media application such as receiving media programs and media data, recording media programs to storage and memory 46, simultaneously recording and playing media programs, playing recorded media programs from storage, and sending and receiving application data and information. Control circuitry 44 may communicate with and control storage and memory 46, communications circuitry 48, and media presentation system 52 using communications paths 50. Paths 50 may be hard-wired, wireless (e.g., Bluetooth), optical paths or the like.

Storage and memory 46 may include a magnetic media recorder (e.g., hard disk drive or the like), memory (e.g. flash memory, EEPROM, or the like), a videocassette recorder, a digital recording device, any other suitable memory and storage device, or any suitable combination thereof. Some or all of storage and memory 46 may be located external to a device that contains control circuitry 44.

Control circuitry 44 may provide media presentation system 52 with media program content stored in storage and memory 46. Control circuitry 44 may also provide media presentation system 52 with media program content that is received from communications circuitry 48. Media presentation system 52 may include a television, a computer system with monitor and speakers, a stereo system, any other suitable presentation device, or any combination thereof.

The user may interact with control circuitry 44 using input device 56. User input device 56 may include a remote control, a keyboard, a wireless keyboard, a display remote, a handheld computer, a mouse, a trackball, a touch pad, or any other suitable interactive interface. User input device 56 may transmit signals to communications circuitry 48 or media presentation system 52 via any suitable communications path, such as a hard-wired or wireless path.

The features of embodiments of the present invention may be described herein in the context of an interactive media application including one or more modules executable by and/or implemented on user television equipment. This is only illustrative. An interactive media application implemented on any suitable platform (user computer equipment, user music equipment, or any other suitable platform) may be used to provide described features, such as providing a navigable EPG.

In an embodiment, the interactive media application may provide the user with access to real-time media programs. The real-time media programs may, for example, be television programming, music programming, interactive gaming programming or any other suitable media. The real-time media programs may be presented to the user on media presentation system 52.

The interactive media application may also display information on user equipment 40, for example, in the form of an overlay, an interactive overlay, a program guide screen, or in any other suitable display format. The interactive media application may display information to inform the user as to the status of the interactive media application or media program, or in response to user inputs (*e.g*., play, pause, fast-forward, rewind, stop, *etc*.). This displayed information may be displayed for a certain period of time and then time out or may be removed in response to a user input (*e.g*., by pressing a button on user input device 56).

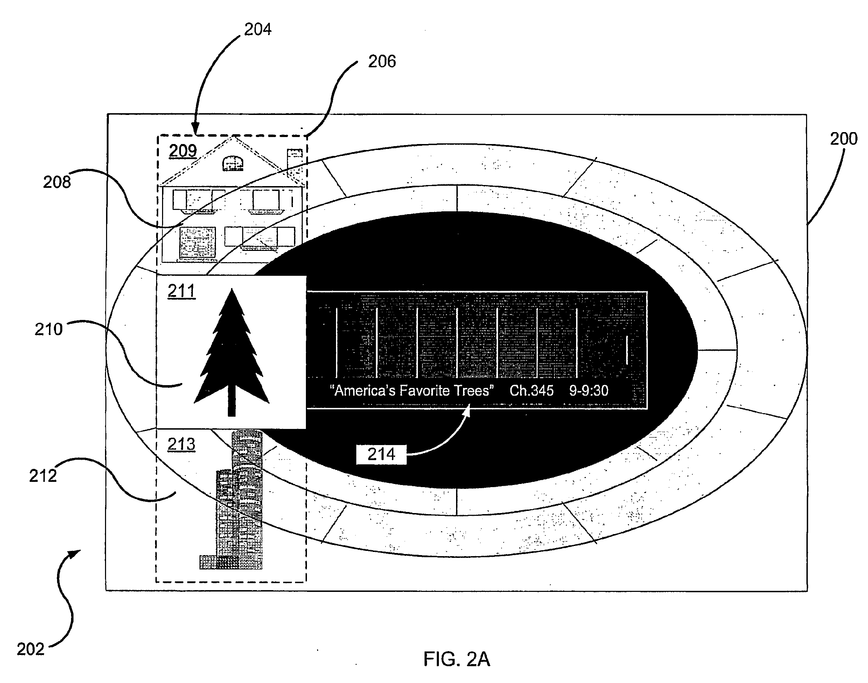

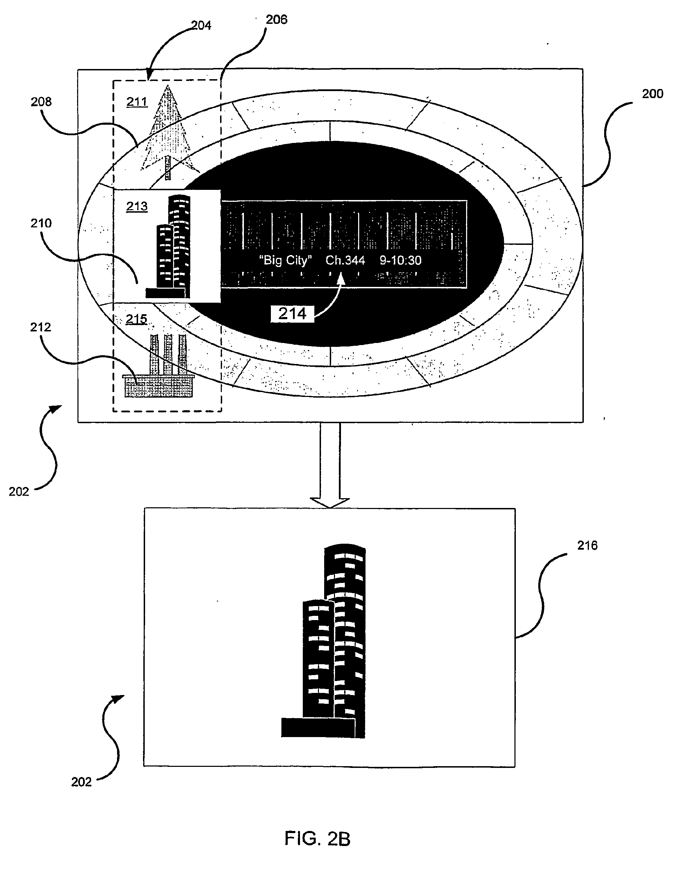

FIGS. 2A and 2B are exemplary screen displays illustrating features of an embodiment of the present invention. In the illustrated embodiment, a user (not shown) of the system 30, is viewing a media program 200 on a screen 202 of the presentation system 52. During the viewing of the media program 200, the user may decide to browse alternative programs available for viewing. For example, the user may wish to review the programs listed in an EPG. Using the input device 56, for example, the user can issue a command to the user equipment 40 to display an EPG.

In response to the command, a user interface 204, such as an EPG according to an embodiment of the invention, is displayed in an area of the screen 202, as indicated by dashed line 206, overlaying the program 200. It should be noted that, although the illustrated user interface 204 is oriented in a vertical direction of the screen 202, the user interface could alternatively be oriented in a horizontal direction or any other suitable direction of the screen. In the illustrated embodiment, the interface includes three subareas 208, 210 and 212 in which are displayed three different small-scale dynamic video programs 209, 211 and 213. In alternative embodiments, of course, more or fewer than three such subareas may be employed.

The video programs 209, 211 and 213 are dynamic in the sense that they offer the user a partial- or full-motion view of at least a subset of a set of selectable programs, the number and type of which is limited only by availability from the system 30. For example, the video programs 209, 211 and 213 may consist of live or near-live views of broadcast television programs, on-demand content, or any other viewable content available from, for example, the distribution center 36 and deliverable to the user equipment 40. Additionally, the video programs 209, 211 and 213 may consist of programs available from the storage 46. In addition, the video programs 209, 211 and 213 may consist of a combination of programs available from these content sources (*i*.*e*., the distribution center 36 and/or storage 46). In this manner, the video programs 209, 211 and 213 serve as metaphors for static descriptions, such as titles or logos, of content listings common to traditional program guides or other menus. Moreover, the video programs 209, 211 and 213 allow a user to see, at the time of selecting an associated program, the progress point in the program from which the user can or will begin post-selection viewing of the program.

In an embodiment, subarea 210 functions as a selection field enabling the user to select for large-screen or other viewing a program associated with a video program displayed in subarea 210. In order to distinguish subarea 210 as the selection field, video programs presented in subareas 208 and 212 are processed to have a display quality distinct from that of a video program displayed in subarea 210. For example, as illustrated in FIG. 2A and 2B, the video programs (*e.g*., 209 and 213 in FIG. 2A) presented in subareas 208 and 212 are semi-transparent, thereby allowing the user to see features of the program 200 in subareas 208 and 212. Alternatively, or additionally, video programs presented in subareas 208 and 212 could be processed to appear out-of-focus. In contrast, the video program (*e.g*., 211 in FIG. 2A) displayed in subarea 210 appears in-focus and opaque, thereby preventing features of the program 200 from appearing in subarea 210. Additionally, in an embodiment, an information field 214 may be displayed within which is shown information, such as, for example, program title and content source (*e.g*., broadcast channel, on-demand, *etc*.), pertaining to the video program displayed in subarea 210.

In an embodiment, the interface 204 is navigable along an axis defined by subareas 208, 210 and 212 to allow the user to browse for a desired program of the set of programs. For example, still referring to FIG. 2A, if the user wishes to place the video program 213 into the selection field of subarea 210, the user may operate a control, such as, for example, a "channel down" button, associated with the input device 56 to effect the desired action.

As best illustrated in FIG. 2B, upon operating the input device 56 in this manner, the video programs 209, 211 and 213 may appear to transition upward on the screen 202. For example, the video program 209 transitions out of subarea 208 and interface 204 and, thus, out of view. The video program 211 transitions out of subarea 210 to be displayed in subarea 208 and appear semi-transparent. The video program 213 transitions out of subarea 212 to be displayed in subarea 210 and come into focused and opaque view. A previously unseen video program 215 transitions to be displayed in subarea 212 and appears semi-transparent. Accordingly, by placing the video program 213 into the selection field of subarea 210 in this manner, the user has, in effect, selected a different subset of video programs for viewing. This, or a similar, process may be repeated by the user to browse successive video-program subsets for desired programming.

Still referring to FIG. 2B, upon placing the video program 213 into the selection field of subarea 210, the user may select for full-screen or other viewing a program associated with the video program 213. For example, the user may press a "select" button on the input device 56, the result of which is that a program 216 associated with the video program 213 occupies a portion of the screen 202 other than subarea 210, and the interface 204 is removed from display. Alternatively, the interface 204 may remain displayed for a predetermined duration after program selection or until the user takes action to dismiss the interface from the screen 202.

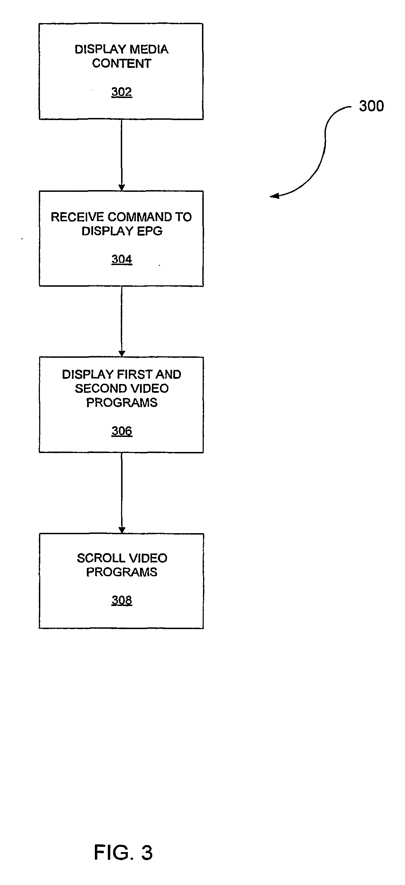

FIG. 3 illustrates a process 300 according to an embodiment of the invention. The process 300 is illustrated as a set of operations shown as discrete blocks. The process 300 may be implemented in any suitable hardware, software, firmware, or combination thereof. The order in which the operations are described is not to be necessarily construed as a limitation.

At a block 302, the control circuitry 44 displays media content on the screen 202. The media content may include any displayable media program, user interface, such as a menu, or other image.

At a block 304, the communications circuitry 48 receives a command to display on the screen 202 a user interface, such as an electronic program guide. For example, the command may be carried by a signal generated by the input device 56 employed by a user of the system 30.

At a block 306, the control circuitry 44, in response to the command, displays an electronic program guide that includes first and second dynamic video programs positioned in respective first and second portions of the screen 202, at least one such portion including an interactive selection field. Alternatively, the second program may be displayed as a static representation of, such as a captured frame from, the second program. In an embodiment, the video programs are part of a video-program sequence that includes additional video programs displayable in the program guide or elsewhere on the screen 202. Each of the video programs functions as a metaphor for a static channel or title listing associated with traditional program guides, thereby allowing a user to preview the program prior to selecting the program for full- or primary-screen viewing. The video programs may be displayed concurrently with and overlaying, for example, the displayed media content.

At a block 308, the control circuitry 44 scrolls the video-program sequence along an axis of screen portions including and oriented along the first and second screen portions. The scrolling may be in response to one or more commands received from the user. Alternatively, the control circuitry 44 may, without user interaction, execute instructions associated with an interactive media application to successively scroll each video program in the sequence into the selection field, each video program remaining in the selection field for a predetermined duration to allow the user to preview, and possibly select for larger-scale viewing, the program.

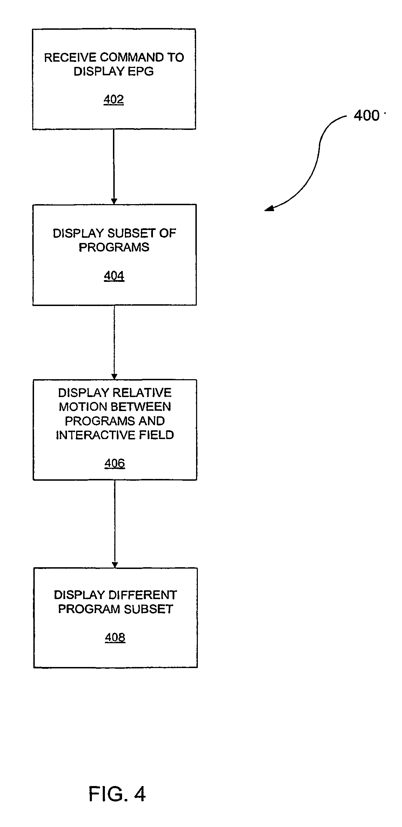

FIG. 4 illustrates a process 400 according to an embodiment of the invention. The process 400 is illustrated as a set of operations shown as discrete blocks. The process 400 may be implemented in any suitable hardware, software, firmware, or combination thereof. The order in which the operations are described is not to be necessarily construed as a limitation.

At a block 402, the communications circuitry 48 receives a command to display an EPG. At a block 404, the control circuitry 44, in response to the command, displays in a program-guide area of the screen 202 at least two programs (*i.e*., a plural subset) of a video-program set. Of course, if the video-program set comprises sufficiently few programs and/or qualities of the system 30 allow, all programs of the set may be simultaneously displayed in a manner suitable to the user. Each program of the subset is displayed in-progress (*e.g*., live, in the case of a broadcast television show, or, otherwise, as a full-motion sequence) in a respective display subarea of the program-guide area. Additionally, each program of the video-program set is associated with a respective content source of a content-source set that may include, for example, broadcast television channels and on-demand or other program storage associated with the system 30. In an embodiment, the system 30 allows the user to choose one or more particular content sources from which to populate the video-program set. For example, the user may create, in a conventional manner, a "favorite-channels" list consisting of those broadcast television channels that the user most frequently watches. Consequently, an interactive media application implementing an embodiment of the invention may be configured such that only video programs associated with the channels in the list will be displayed in the program guide. Alternatively, an interactive media application implementing an embodiment of the invention may be configured such that only video programs stored in the storage 46, distribution center 36, and/or main facility 34 will be displayed in the program guide.

At a block 406, the control circuitry 44 displays on the screen 202 relative motion between each program displayed in the program-guide area and an interactive selection field operable to coincide with the display subarea of at least one of the displayed programs. For example, the selection field may be static with respect to scrollable video programs in the manner discussed with reference to FIGS. 2A and 2B. Alternatively, the selection field may be movable, in the manner of a cursor, with respect to the displayed video programs. Additionally, the selection field may be configure to coincide with more than one subarea, thereby enabling the user to simultaneously select two or more video programs to be displayed in, for example, picture-in-picture mode. In an embodiment, one or more of the distribution center 36 and the control circuitry 44 processes video programs displayed in subareas not coinciding with the selection field to have a display quality that is distinguishable from the display quality of a program displayed in one or more subareas coinciding with the selection field. For example, as discussed with reference to FIGS. 2A and 2B, this video-program processing may cause the programs to appear semi-transparent or out-of-focus.

At a block 408, the control circuitry 44 displays successive different subsets of the video-program set. For example, as elsewhere described herein, the user may issue a command, or the control circuitry 44 may function, to scroll the video programs in order to allow the user to browse programs available for viewing. In the embodiment described above, wherein the selection field is movable relative to the programs displayed in the program-guide area, the selection field may be used, in a manner similar to that employed in traditional program guides, to provoke display of a different subset of video programs by, for example, moving the selection field to an edge of the program-guide area

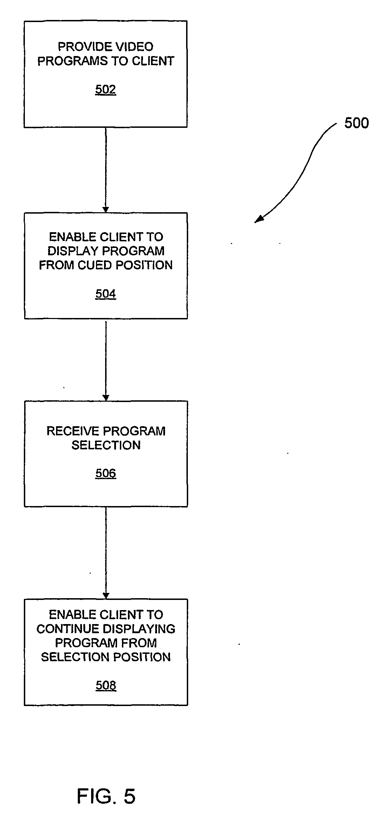

FIG. 5 illustrates a process 500 according to an embodiment of the invention. The process 500 is illustrated as a set of operations shown as discrete blocks. The process 500 may be implemented in any suitable hardware, software, firmware, or combination thereof. The order in which the operations are described is not to be necessarily construed as a limitation.

At a block 502, the distribution center 36 provides a plurality of video programs to the user equipment 40 to be simultaneously displayed in a user-interface (*e.g*., program-guide) portion of the screen 202. At least one of the programs is displayed dynamically.

At a block 504, the user equipment 40 is enabled to display at least one of the programs from a cued position of the program. In an embodiment, the programs are stored on the server 58, for example, and offered on-demand. Further, the programs are offered to allow a user to preview the programs prior to selecting a program for rental. Accordingly, the administrators of the main facility 34, distribution center 36, and/or any other entity exercising control over the video programs may associate with one or more of the programs a conventional indicator, including, for example, metadata, marking a cued progress position (*e.g*., a scene and/or title page) of the program. This program position may be chosen such that, when viewed, it will readily identify the program to, and perhaps better inform the program choice of, the user. Alternatively, if the program is stored in the storage 46, the distribution center 36 may provide, or the control circuitry 44 itself could generate, for association with the program a similar indicator marking a cued progress position.

At a block 506, the communications circuitry 48 receives a selection of a program of the plurality. Depending on the type and/or location of the selected program, this signal may be relayed or otherwise transmitted in appropriate form to the media distribution center 36 and/or main facility 34 as a request to make the program fully available to the user equipment 40. The selection is received during display of a frame of the selected program. The frame corresponds to a selection progress position of the program which may be later in the program than the cued progress position.

At a block 508, and, in an embodiment, in response to the selection, the distribution center 36 and/or main facility 34 enables the user equipment 40 to continue displaying, from the selection progress position, the selected program on a portion of the screen 202 other than the interface portion. Accordingly, upon selection of the program, the user may continue to view the program, without interruption of the program, from the scene of the program viewed at the time of selection. Alternatively, the system 30, in response to the selection, may display the program from its initial frame (*i.e*., the beginning of the program).

Embodiments within the scope of the present invention also include computer-readable media for carrying or having computer-executable instructions or data structures stored thereon. Such computer-readable media can be any available media that is accessible by a general-purpose or special-purpose computer or other electronic device. By way of example, and not limitation, such computer-readable media can include physical storage media such as RAM, ROM, EEPROM, CD-ROM or other optical disk storage, magnetic disk storage or other magnetic storage devices, or any other medium that can carry or store program code means. When information is transferred or provided over a network or another communications connection (either hardwired, wireless, or a combination of hardwired or wireless) to an electronic device, the electronic device properly views the connection as a computer-readable medium. Thus, such a connection is also properly termed a computer-readable medium. Consequently, combinations of the above should also be included within the scope of computer-readable media.

The preceding discussion is presented to enable a person skilled In the art to make and use the invention. Various modifications to the disclosed embodiments will be readily apparent to those skilled In the art, and the generic principles herein may be applied to other embodiments and applications without departing from the scope of the present invention. Thus, the present invention is not intended to be limited to the embodiments shown, but is to be accorded the widest scope consistent with the principles and features disclosed herein.

## Claims

1. A method performed in a system coupled to a display device having a screen (202), the method comprising:
displaying media content (200) on the screen;
receiving a command to display on the screen an electronic program guide, EPG;
in response to the command, displaying, concurrently with and overlaying the media content displayed on the screen, the EPG that includes a set of program listings that a user can navigate through, the program listings including a first video program and a second video program of a plurality of video programs, the first video program (211) being displayed within a first subarea (210) of the screen and the second video program (209, 213) being displayed partially transparent within a second subarea (208, 212) of the screen, wherein the first subarea comprises a user-selectable field enabling a user to select for viewing on the screen a program associated with first video program;
receiving a selection of a program of the plurality of video programs during displaying a frame of the selected program; and
presenting, at the time of receiving the selection, a progress point in the program from which the user can begin post-selection viewing the selected program.

2. The method of claim 1 wherein the media content comprises a second video program of the plurality.

3. The method of claim 1 wherein the first program comprises on-demand content.

4. The method of claim 1, further comprising displaying within the second subarea (208, 212) of the screen (202) at least a representation of the second video program of the plurality.

5. The method of claim 4 wherein the second program has a display quality that is distinguishable from a display quality of the first program.

6. The method of claim 1 wherein displaying the first program comprises scrolling the video programs along an axis of screen subareas (208, 210, 212) including the first subarea (210).

7. The method of claim 1, further performed in a system that includes a content distribution center coupled to at least one client device for presenting programming via a display device having a screen (202), the client device operable to receive a selection of a program of the plurality during display of a frame of the selected program, the frame corresponding to a first progress position of the program, the method further comprising:
enabling the client device to continue displaying, at least substantially from the first progress position, the selected program on a subarea of the screen other than the interface subarea.

8. The method of claim 7, further comprising, prior to the client device displaying in the user interface subarea the at least one program, providing to the client device an indicator corresponding to a second progress position of the at least one program.

9. The method of claim 8 wherein the indicator is operable to enable the client device to display, prior to receiving the selection, the at least one program from the second progress position.

10. A computer-readable medium having stored therein executable instructions operable to cause the system to perform the method of claim 1.

11. The computer-readable medium of claim 10, further for performing the method steps comprising:
in response to the command, displaying the electronic program guide in an area of the screen (202), the electronic program guide including a set of video programs being displayed in-progress;
displaying a selection field substantially coinciding with the first video program in the set; and
rendering other video programs in the set outside the selection field with a display quality distinguishable from the display quality of the first video program.

12. The computer-readable medium as recited in claim 11, wherein the other video programs in the set outside the selection field are rendered to appear out-of-focus.

13. The computer-readable medium as recited in claim 11, the steps further comprising:
receiving a selection to browse the video programs in the electronic program guide; and
in response to the selection, displaying another video program in the set to coincide with the selection field.

14. The computer-readable medium as recited in claim 13, the steps further comprising:
in response to the selection,
displaying the first video program outside the selection field; and
replacing at least one of the video programs in the set with a new video program.

15. The computer-readable medium as recited in claim 11, the steps further comprising:
displaying, on the screen (202), relative motion between each displayed video program and the selection field.

16. The computer-readable medium as recited in claim 11, the steps further comprising:
enabling a user to choose from a content-source set at least one content source from which to populate the set of video programs.

17. The computer-readable medium as recited in claim 16, wherein the at least one content source comprises a broadcast television channel.

## Patentansprüche

1. Verfahren, das in einem System durchgeführt wird, das mit einer einen Bildschirm (202) aufweisenden Anzeigevorrichtung gekoppelt ist, wobei das Verfahren umfasst:
Anzeigen von Medieninhalt (200) auf dem Bildschirm;
Empfangen eines Befehls zum Anzeigen einer elektronischen Programmführung (Electronic Program Guide EPG) auf dem Bildschirm;
in Reaktion auf den Befehl erfolgendes Anzeigen der EPG gleichzeitig mit dem auf dem Bildschirm angezeigten Medieninhalt und in Überlagerung mit demselben, wobei die EPG einen Satz von Programmlisten beinhaltet, durch die ein Anwender navigieren kann, wobei die Programmlisten ein erstes Videoprogramm und ein zweites Videoprogramm aus einer Mehrzahl von Videoprogrammen beinhalten, wobei das erste Videoprogramm (211) innerhalb eines ersten Teilbereiches (210) des Bildschirmes angezeigt wird und das zweite Videoprogramm (209, 213) teilweise transparent innerhalb eines zweiten Teilbereiches (208, 212) des Bildschirmes angezeigt wird, wobei der erste Teilbereich ein anwenderseitig auswählbares Feld umfasst, das einen Anwender in die Lage versetzt, ein dem ersten Videoprogramm zugeordnetes Programm zur Ansicht auf dem Bildschirm auszuwählen;
Empfangen einer Auswahl eines Programms aus der Mehrzahl von Videoprogrammen während des Anzeigens eines Rahmens des ausgewählten Programms; und
zum Zeitpunkt des Empfangens der Auswahl erfolgendes Präsentieren eines Vorrückpunktes in dem Programm, von dem aus der Anwender mit dem nach der Auswahl erfolgenden Ansehen des ausgewählten Programms beginnen kann.

2. Verfahren nach Anspruch 1, wobei der Medieninhalt ein zweites Videoprogramm aus der Mehrzahl umfasst.

3. Verfahren nach Anspruch 1, wobei das erste Programm einen On-Demand-Inhalt umfasst.

4. Verfahren nach Anspruch 1, des Weiteren umfassend ein innerhalb des zweiten Teilbereiches (208, 212) des Bildschirmes (202) erfolgendes Anzeigen wenigstens einer Darstellung des zweiten Videoprogramms aus der Mehrzahl.

5. Verfahren nach Anspruch 4, wobei das zweite Programm eine Anzeigequalität aufweist, die von einer Anzeigequalität des ersten Programms unterscheidbar ist.

6. Verfahren nach Anspruch 1, wobei das Anzeigen des ersten Programms ein Scrollen der Videoprogramme entlang einer Achse von Bildschirmteilbereichen (208, 210, 212), die den ersten Teilbereich (210) beinhalten, umfasst.

7. Verfahren nach Anspruch 1, das des Weiteren in einem System durchgeführt wird, das eine Inhaltsverteilungszentrale beinhaltet, die mit wenigstens einer Client-Vorrichtung zum Präsentieren eines Programms bzw. einer Programmierung über eine einen Bildschirm (202) aufweisende Anzeigevorrichtung gekoppelt ist, wobei die Client-Vorrichtung betrieben werden kann zum Empfangen einer Auswahl eines Programms aus der Mehrzahl während der Anzeige eines Rahmens des ausgewählten Programms, wobei der Rahmen einer ersten Vorrückposition des Programms entspricht, wobei das Verfahren des Weiteren umfasst:
Ermöglichen, dass die Client-Vorrichtung wenigstens im Wesentlichen von der ersten Vorrückposition aus mit dem Anzeigen des ausgewählten Programms in einem Teilbereich des Bildschirmes, der nicht der Schnittstellenteilbereich ist, fortfährt.

8. Verfahren nach Anspruch 7, des Weiteren umfassend ein für die Client-Vorrichtung erfolgendes Bereitstellen eines Indikators entsprechend einer zweiten Vorrückposition des wenigstens einen Programms, bevor die Client-Vorrichtung in dem Anwenderschnittstellenteilbereich das wenigstens eine Programm anzeigt.

9. Verfahren nach Anspruch 8, wobei der Indikator betrieben werden kann zu ermöglichen, dass die Client-Vorrichtung vor dem Empfangen der Auswahl das wenigstens eine Programm von der zweiten Vorrückposition aus anzeigt.

10. Computerlesbares Medium, auf dem ausführbaren Anweisungen gespeichert sind, die dafür betrieben werden können zu veranlassen, dass das System das Verfahren nach Anspruch 1 ausführt.

11. Computerlesbares Medium nach Anspruch 10, des Weiteren zum Durchführen der Verfahrensschritte umfassend:
in Reaktion auf den Befehl erfolgendes Anzeigen der elektronischen Programmführung in einem Bereich des Bildschirms (202), wobei die elektronische Programmführung einen Satz von Videoprogrammen, die beim Vorrücken (in-progress) angezeigt werden, beinhaltet;
Anzeigen eines Auswahlfeldes, das im Wesentlichen mit dem ersten Videoprogramm in dem Satz zusammenfällt; und
Erstellen anderer Videoprogramme in dem Satz außerhalb des Auswahlfeldes mit einer Anzeigequalität, die von der Anzeigequalität des ersten Videoprogramms unterscheidbar ist.

12. Computerlesbares Medium nach Anspruch 11, wobei die anderen Videoprogramme in dem Satz außerhalb des Auswahlfeldes derart erstellt werden, dass sie unscharf (out of focus) erscheinen.

13. Computerlesbares Medium nach Anspruch 11, wobei die Schritte des Weiteren umfassen:
Empfangen einer Auswahl zum Browsen der Videoprogramme in der elektronischen Programmführung; und
in Reaktion auf die Auswahl erfolgendes Anzeigen eines anderen Videoprogramms in dem Satz derart, dass es mit dem Auswahlfeld zusammenfällt.

14. Computerlesbares Medium nach Anspruch 13, wobei die Schritte des Weiteren umfassen:
in Reaktion auf die Auswahl erfolgendes
Anzeigen des ersten Videoprogramms außerhalb des Auswahlfeldes; und
Ersetzen wenigstens eines der Videoprogramme in dem Satz durch ein neues Videoprogramm.

15. Computerlesbares Medium nach Anspruch 11, wobei die Schritte des Weiteren umfassen:
auf dem Bildschirm (202) erfolgendes Anzeigen einer Relativbewegung zwischen jedem angezeigten Videoprogramm und dem Auswahlfeld.

16. Computerlesbares Medium nach Anspruch 11, wobei die Schritte des Weiteren umfassen:
Ermöglichen, dass ein Anwender aus einem Satz von Inhaltsquellen wenigstens eine Inhaltsquelle wählt, von der aus der Satz von Videoprogrammen beliefert wird.

17. Computerlesbares Medium nach Anspruch 16, wobei die wenigstens eine Inhaltsquelle einen Rundfunkfernsehkanal umfasst.

## Revendications

1. Procédé mis en oeuvre dans un système couplé à un dispositif d'affichage possédant un écran (202), the procédé comprenant :
l'affichage d'un contenu multimédia (200) à l'écran ;
la réception d'une commande pour afficher sur l'écran un guide électronique des programmes, EPG ;
en réponse à la commande, l'affichage, parallèlement au contenu multimédia affiché à l'écran, et en superposition à celui-ci, du guide électronique des programmes incluant un ensemble de listes de programmes au travers duquel un utilisateur peut naviguer, les listes de programmes comportant un premier programme vidéo et un deuxième programme vidéo parmi plusieurs programmes vidéo, le premier programme vidéo (211) étant affiché à l'intérieur d'une première zone secondaire (210) de l'écran et le deuxième programme vidéo (209, 213) étant affiché de manière partiellement transparente dans une deuxième zone secondaire (208, 212) de l'écran, dans lequel la première zone secondaire comporte un champ sélectionnable par l'utilisateur permettant à l'utilisateur de sélectionner, pour visualisation à l'écran, un programme associé avec le premier programme vidéo ;
la réception d'une sélection d'un programme parmi lesdits plusieurs programmes vidéo pendant l'affichage d'une image du programme sélectionné ; et
la présentation, au moment de la réception de la sélection, d'un point de progression dans le programme à partir duquel l'utilisateur peut commencer à visualiser, après sélection, le programme sélectionné.

2. Procédé selon la revendication 1, dans lequel le contenu multimédia comporte un deuxième programme vidéo parmi lesdits plusieurs programmes vidéo.

3. Procédé selon la revendication 1, dans lequel le premier programme comporte un contenu à la demande.

4. Procédé selon la revendication 1, comportant en outre l'affichage, dans la deuxième zone secondaire (208, 212) de l'écran (202), d'au moins une représentation du deuxième programme vidéo desdits plusieurs programmes vidéo.

5. Procédé selon la revendication 4, dans lequel le deuxième programme possède une qualité d'affichage pouvant être distinguée d'une qualité d'affichage du premier programme.

6. Procédé selon la revendication 1, dans lequel l'affichage du premier programme comporte le défilement des programmes vidéo le long d'un axe des zones secondaires de l'écran (208, 210, 212) contenant la première zone secondaire (210).

7. Procédé selon la revendication 1, mis en oeuvre en outre dans un système incluant un centre de diffusion de contenus, couplé à au moins un dispositif client, pour présenter des programmes via un dispositif d'affichage possédant un écran (202), le dispositif client pouvant fonctionner pour recevoir une sélection de programmes parmi la pluralité de programmes pendant l'affichage d'une image du programme sélectionné, l'image correspondant à une première position de progression du programme, le procédé comportant en outre :
la possibilité pour le dispositif client de poursuivre l'affichage, au moins sensiblement à partir de la première position de progression, du programme sélectionné dans une zone secondaire de l'écran différente de la zone secondaire d'interface.

8. Procédé selon la revendication 7, comportant en outre, préalablement à l'affichage par le dispositif client dans la zone secondaire d'interface utilisateur dudit au moins un programme, l'affichage, sur le dispositif client, d'un indicateur correspondant à une deuxième position de progression dudit au moins un programme.

9. Procédé selon la revendication 8, dans lequel l'indicateur peut être mis en oeuvre pour permettre au dispositif client d'afficher, préalablement à la réception de la sélection, ledit au moins un programme à partir de la deuxième position de progression.

10. Support lisible par ordinateur contenant des instructions exécutables utilisables pour provoquer la mise en oeuvre, par le système, du procédé selon la revendication 1.

11. Support lisible par ordinateur selon la revendication 10, permettant en outre de mettre en oeuvre les étapes de la méthode consistant à :
en réponse à la commande, afficher le guide
électronique des programmes dans une zone de l'écran (202), le guide électronique des programmes comportant un ensemble de programmes vidéo affichés en cours de progression ;
afficher un champ de sélection coïncidant sensiblement avec le premier programme vidéo de l'ensemble ; et
restituer d'autres programmes vidéo de l'ensemble, hors du champ de sélection, avec une qualité d'affichage pouvant être distinguée de la qualité d'affichage du premier programme vidéo.

12. Support lisible par ordinateur selon la revendication 11, dans lequel les autres programmes vidéo de l'ensemble situé hors du champ de sélection sont restitués pour apparaître de manière floue.

13. Support lisible par ordinateur selon la revendication 11, les étapes comportant en outre :
la réception d'une sélection pour parcourir les programmes vidéo du guide électronique des programmes ;
et
en réponse à la sélection, l'affichage d'un autre programme vidéo de l'ensemble pour coïncider avec le champ de sélection.

14. Support lisible par ordinateur selon la revendication 13, les étapes comportant en outre :
en réponse à la sélection,
l'affichage du premier programme vidéo hors du champ de sélection ; et
le remplacement d'au moins l'un des programmes vidéo de l'ensemble par un nouveau programme vidéo.

15. Support lisible par ordinateur selon la revendication 11, les étapes comportant en outre :
l'affichage, à l'écran (202), d'un mouvement relatif entre chaque programme vidéo affiché et le champ de sélection.

16. Support lisible par ordinateur selon la revendication 11, les étapes comportant en outre :
la possibilité pour l'utilisateur de choisir, dans un ensemble de sources de contenus, au moins une source de contenus à partir de laquelle compléter l'ensemble de programmes vidéo.

17. Support lisible par ordinateur selon la revendication 16, dans lequel ladite au moins une source de contenus comporte une chaîne de télévision.
